# EUROPEAN PATENT APPLICATION

(11) **EP 4 851 945 A1**
(43) Date of publication of application: **09.12.2026**
(21) Application number: 25300078.0
(22) Date of filing: 06.06.2025
(51) Int. Cl.: G06V 10/30, G06T 5/60, G06T 5/70

(54) **DENOISING IMAGES USING VIRTUAL FLASH REMOVAL**

(71) Applicant: Sony Interactive Entertainment Inc., Tokyo 108-0075 (JP)
(72) Inventor: MAKRIDIS, Pavlos, Tokyo, 108-0075 (JP); LECHAT, Alexis, Tokyo, 108-0075 (JP); TREDER, Matthias, Tokyo, 108-0075 (JP); TORANO, Jesus Alejandro Zarzar, Tokyo, 108-0075 (JP)
(74) Representative: Fish & Richardson P.C.

(57) **Abstract**

Methods, systems, and apparatus for provisioning denoisers for denoising images and include generating a ground truth image at a first SPP and a noisy image at a second SPP, each image depicting a scene of a 3D model, generating flash data by casting a virtual light point along at least a portion of each path and being stored in a flash buffer, generating a virtual flash image by combining the flash buffer with one or more auxiliary buffers of the noisy image, storing the ground truth image and the virtual flash image as a training pair in a set of training pairs, each training pair in the set of training pairs being generated for a respective scene of the plurality of scenes, training a denoiser to denoise images using the set of training pairs, and after training, deploying the denoiser for inference to denoise images.

## Description

### TECHNICAL FIELD

This specification relates generally to real-time rendering of digital images and more particularly to denoising digital images using virtual flash removal.

### BACKGROUND

Real-time rendering includes the relatively rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

### SUMMARY

This specification describes systems, methods, devices, and other techniques relating to real-time rendering of digital images and more particularly to denoising digital images using virtual flash removal.

In general, innovative aspects of the subject matter described in this specification can include actions of generating a ground truth image at a first samples per pixel (SPP) and a noisy image at a second SPP, each of the ground truth image and the noisy image depicting a scene of a plurality of scenes represented within a three-dimensional (3D) model, generating flash data using paths of rays used to generate the noisy image, the flash data being generated by casting a virtual light point along at least a portion of each path and being stored in a flash buffer, generating a virtual flash image by combining the flash buffer with one or more auxiliary buffers of the noisy image, storing the ground truth image and the virtual flash image as a training pair in a set of training pairs, each training pair in the set of training pairs being generated for a respective scene of the plurality of scenes, training a denoiser to denoise images using the set of training pairs, and after training, deploying the denoiser for inference to denoise images. Other implementations of this aspect include corresponding systems, apparatus, and computer programs, configured to perform the actions of the methods, encoded on computer storage devices.

These and other implementations can each optionally include one or more of the following features: the training pair further includes the noisy image and one or more buffers; the one or more buffers includes one or more of auxiliary buffers of the noisy image and the flash buffer; the flash data represents an effect that the virtual light point has in determining illumination for a respective pixel; the flash data is generated by applying a virtual flash to the scene from a point-of-view (POV) of a camera; at least a portion of each path includes a portion to a last hit point of a respective ray within the scene; the virtual light point provides direct illumination of a hit point within the scene; the denoiser includes a neural network; and each of the ground truth image and the noisy image is generated using Monte Carlo rendering.

The present disclosure also provides a non-transitory computer-readable storage medium coupled to one or more processors and having instructions stored thereon which, when executed by the one or more processors, cause the one or more processors to perform operations in accordance with implementations provided herein.

It is appreciated that the methods and systems in accordance with the present disclosure can include any combination of the aspects and features described herein. That is, methods and systems in accordance with the present disclosure are not limited to the combinations of aspects and features specifically described herein, but also include any combination of the aspects and features provided.

Particular implementations of the subject matter described in this specification can be executed so as to realize one or more of the following advantages.

For example, implementations of the present disclosure provide improved performance over traditional approaches, particularly at low samples per pixel (SPP), such as 1 SPP. As described herein, by leveraging a virtual flash image, a structurally informative input is provided even when the original signal is sparse and noisy. This significantly improves reconstruction quality at low SPPs where conventional kernel prediction networks struggle. As another example, implementations of the present disclosure reduces network complexity. More particularly, because the virtual flash reveals globally coherent structural information, the network does not require large receptive fields or wide kernels, making it lightweight and suitable for real-time applications.

As another example, implementations of the present disclosure provide more efficient memory usage over traditional approaches. More particularly, implementations of the present disclosure avoid the need to predict wide spatial kernels (e.g., 21×21), which would otherwise increase memory and bandwidth costs. The flash buffer of the present disclosure requires only a small number of channels (e.g., 3 channels) and can be computed with minimal overhead during rendering. As still another example, implementations of the present disclosure are compatible with existing real-time rendering pipelines. More particularly, implementations of the present disclosure can be integrated into existing path tracers with minor modifications to compute and output the flash buffer. No changes are needed to sampling strategies or the core rendering pipeline.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIGs. 1A and 1B depict diagrams representative of techniques for real-time rendering of images.
FIGs. 2A to 2E depict diagrams and images representative of noise introduced in real-time rendering of images.
FIG. 3 depicts an environment of FIG. 1A including a virtual flash in accordance with implementations of the present disclosure.
FIG. 4 depicts an example architecture to execute denoising digital images using virtual flash removal in accordance with implementations of the present disclosure.
FIG. 5 is a flow diagram of an example process in accordance with implementations of the present disclosure.
FIG. 6 shows an example of a computing device and associated accessories that can be employed to execute implementations of the present disclosure.

Like reference numbers and designations in the various drawings indicate like elements.

### DETAILED DESCRIPTION

The technology of this patent application is directed to real-time rendering of digital images and denoising of digital images. More particularly, the technology of this patent application is directed to denoising digital images using virtual flash removal.

To provide context for the subject matter of the present disclosure, real-time rendering includes the relatively rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. Using video games as a non-limiting example, real-time rendering enables players to see and interact with a game world that updates in real-time in response to player input (e.g., moving a character, changing a camera angle). The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

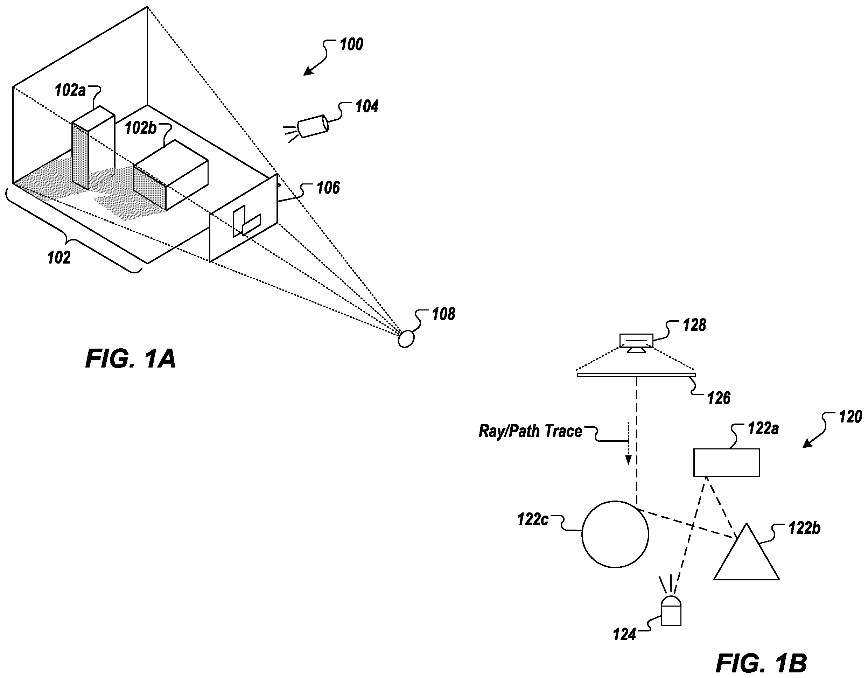

Real-time rendering of images is discussed in further detail herein with reference to FIGs. 1A and 1B, which depict schematic diagrams representative of techniques for real-time rendering of images. As used herein, the term real-time refers to execution of operations (e.g., processing data, transmitting data) without intentional delay given processing limitations of a system, the time required to accurately obtain data, store data, and the like, and any rate of change of data.

With particular reference to FIG. 1A, an environment 100 includes a multi-dimensional model 102 (a three-dimensional (3D) model) representative of a scene (e.g., a scene within a game world). For example, the multi-dimensional model 102 can be generated by an application (e.g., a video game application) and depicts objects 102a, 102b and represents interactions with and/or between the objects 102a, 102b within the scene. A light source 104 casts light on the scene that affects the appearance of the objects 102a, 102b within the scene. Although a single light source 104 is depicted, it is contemplated that multiple light sources can be provided. In the example of FIG. 1A, the light results in the objects 102a, 102b casting respective shadows.

With regard to real-time rendering, an image displayed within an image plane 106 is generated from the perspective of a camera 108. The image depicts a two-dimensional (2D) representation of the 3D scene. The image can be, for example, a frame of a series of frames to depict animation within the scene. That is, the image is regenerated at a frame-rate (e.g., ≥ 60 FPS) to depict changes in the scene over time (e.g., as the objects 102a, 102b interact with each other, as users interact with the objects, as the position of the camera 108 changes). The image is provided as a set of pixels (e.g., a 4K image (3840 x 2160 pixels), a 1080p image (1920 x 1080 pixels), a 1440p image (2560 x 1440 pixels). Each pixel is associated with a set of data that describes characteristics of subject matter that is depicted in the image (e.g., the objects 102a, 102b). Example data in the set of data can include color data (e.g., RGBA data), depth data (e.g., Z-buffer), stencil data, normal vector (surface direction), and the like.

With reference to FIG. 1B, techniques referred to as ray tracing and path tracing will be described. In general, ray tracing can be described as the operation of tracing a ray and finding its first intersection point (referred to as hit) with the geometry within the scene. Path tracing extends additional rays from hits (e.g., from the first hit determined using ray tracing) to effectively bounce around the geometry to define a light path. For clarity, the term path tracing is used for the following discussion.

Path tracing can be used for real-time rendering of high quality (e.g., photorealistic) images by simulating the manner in which light interacts with objects in a scene. FIG. 1B depicts an environment 120 representative of a scene having objects 122a, 122b, 122c. A light source 124 emits light on the scene and a camera 128 generates images of the scene. An image can be represented in an image plane 126.

Path tracing performs pixel shading to simulate global illumination to account for more complex interactions and to improve image realism. Path tracing, which includes multiple bounces within the scene along paths, simulates complex light paths including indirect lighting, color bleeding, caustics, and the like. For path tracing, each pixel requires numerous rays (tens, hundreds, thousands) to be considered in order to provide a noise-free, accurate image. This is computationally expensive and too slow for real-time rendering under realistic hardware constraints.

For each pixel, the rendering equation is approximated to determine the total outgoing light from the surface represented in the respective pixel as a function of emitted light, incoming light, material properties (e.g., mirror, glossy, matte), and geometric properties (e.g., Lambert Cosine Law). Due to the complexity of the rendering equation, which is a recursive equation, particularly when accounting for indirect lighting and multiple light-surface interactions, a direct analytical solution is not feasible.

To address the computational expense of techniques such as path tracing and the infeasibility of calculating the rendering equation, Monte Carlo rendering has become a widely adopted technique. Monte Carlo rendering produces photorealistic images by simulating the physical behavior of light. At a high-level, Monte Carlo rendering uses probability and randomness to approximate lighting values that would be too complex and/or too slow to compute under realistic hardware constraints.

Specifically, Monte Carlo rendering utilizes stochastic sampling to approximate solutions to the rendering equation, discussed above, which models the transport of light in a virtual scene. Monte Carlo rendering employs random sampling to estimate the integral components of light transport, where light contribution is computed based on probabilistic sampling, using functions such as the bidirectional reflectance distribution function (BRDF) to evaluate the surface response. The results from the sampled paths are averaged to estimate the color or radiance of each pixel in the image. As more samples are taken, the estimate converges toward an accurate solution, enabling realistic simulation of lighting phenomena such as soft shadows, indirect illumination, and caustics.

In achieving convergence, Monte Carlo rendering limits the number of paths (rays cast) per pixel, where each path is considered a sample. Accordingly, a metric, referred to as samples per pixel (SPP), is used to limit a number of paths (rays cast) processed for each pixel. The higher the SPP, the more computationally intensive (and slow) the processing and the better the accuracy of the rendered image. The lower the SPP, the more computationally efficient (and fast) the processing, but accuracy is lost. Further, due to its stochastic nature, Monte Carlo rendering introduces noise, which increases with lower SPPs. The more noise, the lower the visual fidelity (accuracy) of the rendered image.

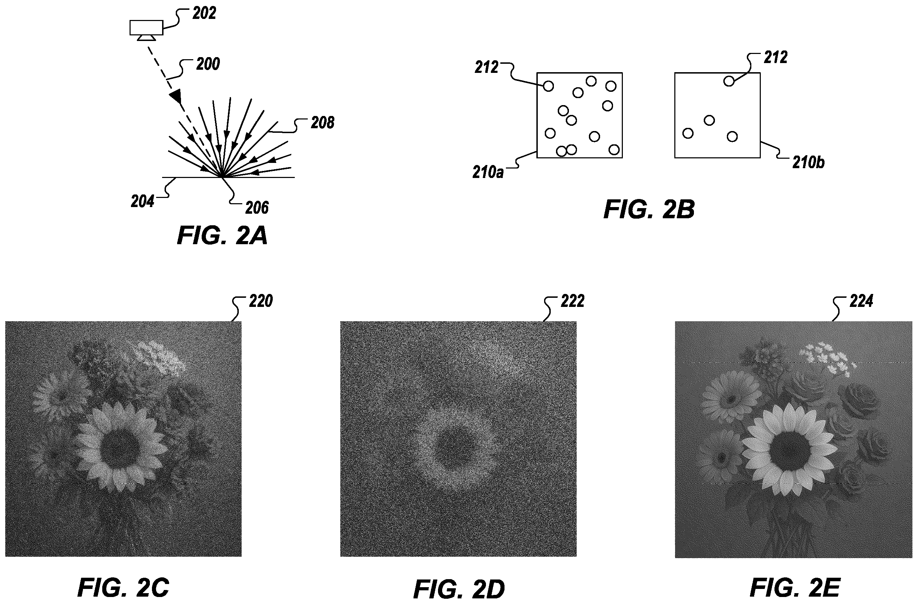

FIGs. 2A to 2E depict diagrams and images representative of noise introduced in real-time rendering of images. In the example of FIG. 2A, for a pixel, a path 200 of a ray is cast from a camera 202 and contact a surface 204 at a point 206. Here, the surface 202 represents a surface of an object within a scene and the point 206 is the point, from which the ray is reflected to the camera 202 along the path 200. As discussed above, the rendering equation is solved for the ray to determine the outgoing light of the rays toward the camera 202. As discussed above this, among other properties, is a function of incoming light represented as incoming rays 208 (e.g., from direct light source(s), from indirect light source(s)). The ray can be one of tens, hundreds, thousands, or more rays for the pixel that could be reflected from the surface 204 at various angles. Ideally, the outgoing light for the pixel would be calculated over all of the rays with a given outgoing light for each ray. However, this is computationally infeasible, particularly under realistic hardware constraints.

To address this, and as discussed above, Monte Carlo rendering randomly samples rays (paths) to provide a sample of rays that the rendering equation is solved over. That is, Monte Carlo rendering is performed using a selected SPP to limit the number of rays (paths) considered. To further improve computational efficiency, the number of incoming rays 208 considered in the calculations can be limited. For example, techniques, such as importance sampling and multiple importance sampling can be used to limit the number of incoming rays 208 used for the calculations.

FIG. 2B depicts a pixel 210a and a pixel 210b, each pixel 210a, 210b having multiple samples 212, each sample indicating a respective ray that contributes an outgoing light value to the total outgoing light value determined for the respective pixel. In the example of FIG. 2B, the pixel 210a has a first SPP (e.g., 12 SPP) and the pixel 210b has a second SPP (e.g., 4 SPP) that is lower than the first SPP. As such, the first SPP results in a noisy image that has a higher fidelity than a noisy image resulting from the second SPP. For example, an image 220 of FIG. 2C can represent a noisy image that is generated using the first SPP and an image 222 of FIG. 2D can represent a noisy image that is generated using the second SPP. As represented in FIGs. 2C and 2D, lower SPPs result in a higher amount of noise. As such, while lower SPPs are more computationally efficient, they result in images having higher amounts of noise and thus, less accurate (lower fidelity) images.

For real-time rendering applications, denoising is used to maintain visual fidelity (accuracy) and computational performance. At a high-level, denoising includes applying a denoiser to noisy images to smooth out the noise and produce a cleaner, more visually accurate image (i.e., an output image that is less noisy than an input image). Denoising can include spatial filtering based on neighboring pixels and temporal filtering based on pixels from previous frames. In some cases, denoising can include using machine learning (ML) models that are trained to reconstruct higher quality images from lower quality, noisy images. With reference to FIG. 2D, an image 224 can be provided as a denoised image of one of the images 220, 222 of FIGs. 2C and 2D, respectively.

In real-time rendering using Monte Carlo rendering, denoising is executed to produce high-quality images under low SPP conditions. One of the more effective classes of denoisers, kernel-predicting networks (ML models), has shown success in handling noisy inputs at moderate to high SPPs by predicting spatially adaptive filter kernels for each pixel. These kernels are then applied to the noisy image to produce a cleaner (less noisy) output image.

However, at low SPP (e.g., 1 SPP), the performance of kernel-predicting networks degrades significantly. This is due to the highly sparse and signal-poor nature of the input image (noisy image), which makes it difficult for the kernel-predicting network to predict effective kernels. While increasing kernel size (e.g., up to 21×21 pixels) can compensate for this by increasing the receptive field, such an approach is infeasible in memory- and performance-constrained environments like real-time applications on consumer-grade consoles or GPUs. Larger kernels substantially increase both the computational and memory overhead, because the kernel-predicting network must predict a very high number of per-pixel weights.

In view of the foregoing, implementations of the present disclosure reformulate noise reduction in images as a virtual flash removal task. More particularly, and as described in further detail herein, implementations of the present disclosure synthesize an auxiliary flash image using a virtual light source located at the camera. The auxiliary flash image, referred to as a virtual flash image herein, is more structurally complete and can serve as a robust input for denoising using a neural network. The virtual flash images enables the neural network to discern image features from noise. The neural network is trained to translate a flash-enhanced image, together with standard G-buffer data, into a high-quality denoised output. In this manner, and among other advantages, implementations of the present disclosure address the limitations of kernel-based denoising at low SPP.

As described in further detail herein, during path tracing (e.g., using Monte Carlo rendering), for each ray, a last surface interaction (hit point) along the path is determined, and a contribution of a virtual point light source located at the origin (the camera) to this last hit point is determined. The resulting radiance is stored in an auxiliary buffer, referred to herein as a flash buffer. In processing the image data, the virtual flash contribution is composited onto the original noisy image using metadata from the path tracer (e.g., surface normals, visibility, albedo). This produces a synthetic flash image, referred to herein as a virtual flash image, that resembles a photograph taken with a flash in a dark environment-structurally informative but with unnatural lighting. More particularly, the virtual flash image contains various image features that cannot be captured from geometric information such as that provided in G-buffers (e.g., depth values, normals). For example, reflective and refractive features of a transparent objects can be captured in the virtual flash image

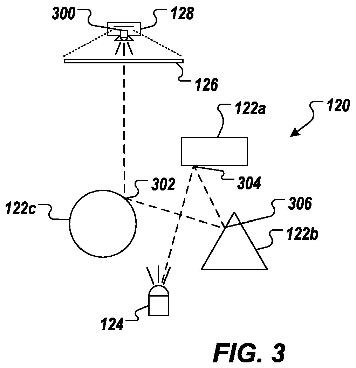

Generation of the virtual flash image is described in further detail with reference to FIG. 3, which depicts the environment 100 of FIG. 1A including a virtual flash 300 in accordance with implementations of the present disclosure. As described in detail with reference to FIGs. 1A to 2E, during path tracing (e.g., in Monte Carlo rendering), paths of rays from pixels of an image plane 126 (e.g., the point-of-view of the camera 128) are traced to hit points in objects and image data is generated for each pixel. In some examples, the image data is based on a SPP. In some implementations, a ground truth image is generated for the scene at a relatively high SPP (e.g., > 1000 SPP).

In accordance with implementations of the present disclosure, a noisy image is generated for the scene at a relatively low SPP (e.g., < 10 SPP, < 20 SPP, < 50 SPP). As such, image data is provided for each pixel of the noisy image. In some implementations, a virtual flash image is generated the by, for each ray used to generate the noisy image, using the virtual flash 300 to directly light the last hit point of the ray. In the example of FIG. 3, an example ray includes hit points 302, 304, 306, as the ray bounces within the scene, with the last hit point being the hit point 302. In this manner, the virtual flash 300 directly lights the hit point 302, which otherwise had indirect light reflected from objects 122a, 122b. The virtual flash 300 lights the hit point using a virtual light point. This is done for each path to determine flash image data for each pixel at the same SPP as the noisy image. In some examples, the flash image data is stored as a flash buffer and accounts for the impact that the virtual light points have in illumination for the respective pixels. The virtual flash image is generated by combining the flash image data of the flash buffer with the auxiliary buffer data (e.g., G-buffer, Z-buffer) of the noisy image. That is, for example, for each pixel, copying the auxiliary buffer(s) from the image data of the noisy image and combining it with the flash buffer to define the image data for the virtual flash image.

This can be repeated for tens, hundreds, thousands of scenes, such that a noisy image, a virtual flash image, and a ground truth image are generated for each scene.

In accordance with implementations of the present disclosure, a neural network (e.g., a convolution neural network (CNN)) is trained to generate a denoised image based on the noisy image, the virtual flash image, and the auxiliary buffers. Here, the denoised image approximates a respective ground truth image. In some examples, training data is provided for each scene and includes an input expected output pair (training pair). In some examples, the input includes a noisy image, a virtual flash image, and auxiliary buffers and the expected output includes a ground truth image.

In general, training can be described as being executed over multiple iterations with each iteration adjusting one or more hyperparameters of the neural network. In some examples, each iteration provides a loss value determined using a loss function. Example loss functions can include, without limitation, pixel-wise loss (e.g., using mean squared error (MSE), mean absolute error (MAE)), perceptual loss, structural similarity loss, and adversarial loss. The loss value represents an accuracy of the neural network in providing output based on input from training data. For example, during an iteration, a noisy image, a virtual flash image, and auxiliary buffers of a training pair are provided as input to the neural network and a denoised image is provided as output. The denoised image is compared to the ground truth image (expected output) of the training pair using the loss function to generate the loss value. In some examples, when the loss is determined to be sufficiently low (e.g., zero, below a threshold value) training of the neural network can be determined to be complete. In some examples, a pre-determined number of iterations are executed.

After training, the neural network can be deployed as a denoiser for denoising images, such as images that are generated in real-time using Monte Carlo rendering. For example, the neural network is installed on a computing device (e.g., a gaming console) that enables users to interact with one or more applications (e.g., play video games). During interactions, Monte Carlo rendering is performed to generate images in real-time (e.g., immediately responsive to interactions within the video game), each image being generated at a predefined SPP (e.g., < 10 SPP) and having a first level of noise. For each image, a virtual flash image is generated, as described herein. The noisy image, the virtual flash image, and the auxiliary buffers are processed through the neural network to provide a denoised version of the noisy image, referred to as a denoised image. In some examples, the denoised image has a second level of noise that is (significantly) less than the first level of noise. The denoised image is displayed (e.g., as a frame) to the user of the application.

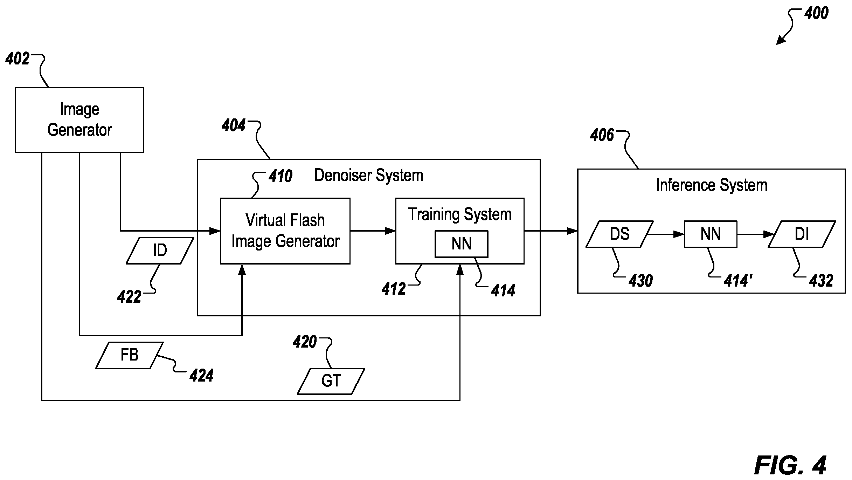

FIG. 4 depicts an example architecture 400 to execute provision and deploy a denoiser for denoising digital images using virtual flash removal in accordance with implementations of the present disclosure. In the example of FIG. 4, the example architecture 400 includes an image generator 402, a denoiser system 404, and an inference system 406. In the depicted example, the denoiser system 404 includes a virtual flash image generator 410 and a training system 412. As described in further detail herein, the training system 412 trains a denoiser 414 to provide a trained denoiser 414' the is deployed to the inference system 406.

In further detail, the image generator 402 generates images, where each image depicts a scene. In some examples, each image is generated using Monte Carlo rendering at a predefined SPP. For example, the image generator 402 can be a gaming console that executes one or more applications (video games) to depict scenes, images being generated for each scene, as described in further detail herein. More particularly, for each scene of multiple scenes, the image generator 402 generates a ground truth image 420, generates a noisy image 422, and generates a flash buffer 424. In some examples, the ground truth image 420 is generated at a first SPP (e.g., > 1000 SPP) and the noisy image 422 is generated at a second SPP (e.g., 1 SPP, < 10 SPP). In some examples, the flash buffer 424 is generated using a virtual flash, as described herein with reference to FIG. 2.

In some implementations, the virtual flash image generator 410 generates a virtual flash image using the noisy image 422 and the flash buffer 424. For example, the virtual flash image generator 410 copies one or more auxiliary buffers of the noisy image 422 and combines the one or more auxiliary buffers with the flash buffer 424. In this manner, the virtual flash image is a combination of the flash buffer 422 and the one or more auxiliary buffers of the noisy image 422. In some examples, the noisy image, the virtual flash image, and the auxiliary buffers are provided to the training system 412 and can be stored along with the corresponding ground truth image 420 as a training pair. As described in detail herein, this process can be repeated for multiple scenes to generate multiple training pairs (e.g., tens, hundreds, or thousands of scenes to generate ten, hundreds, thousands of training pairs, respectively).

As described herein, the denoiser 414 can be provided as a neural network that is trained to denoise images using the training pairs. More particularly, the training pairs are processed through multiple iterations of training to train the denoiser 414, as described herein. After training, the denoiser 414' is deployed to the inference system 406 for denoising images, such as images that are generated in real-time using Monte Carlo rendering. For example, the inference system 406 can be provided as a computing device (e.g., a gaming console) that the trained denoiser 414' is installed on. In some examples, the inference system 406 enables users to interact with one or more applications (e.g., play video games). During interactions, Monte Carlo rendering is performed to generate images (noisy images) in real-time (e.g., immediately responsive to interactions within the video game), each image being generated at a predefined SPP (e.g., 1 SPP, < 10 SPP) and having a first level of noise. For each image, a virtual flash image is generated, as described herein. A denoising set (DS) 430 can be provided and can include the noisy image, the virtual flash image, and the auxiliary buffer(s) (e.g., of the noisy image). In some examples, the denoising set 430 is processed through the denoiser 414' to provide a denoised version of the noisy image, referred to as a denoised image (DI) 432. In some examples, the denoised image 432 has a second level of noise that is (significantly) less than the first level of noise. The denoised image 432 is displayed (e.g., as a frame) to the user of the application.

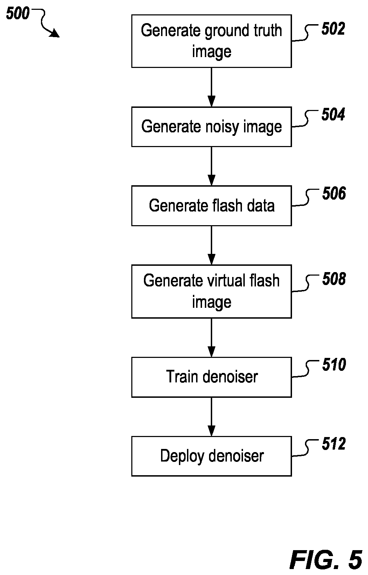

FIG. 5 is a flow diagram of an example process 500 in accordance with implementations of the present disclosure. In some examples, at least a portion of the example process 500 can be executed to provision and deploy denoisers for denoising images generated in real-time using Monte Carlo rendering.

A ground truth image is generated for a scene (502). For example, and as described in detail herein with reference to FIG. 4, the image generator 402 generates the ground truth image 420 at a first SPP (e.g., > 1000 SPP). A noisy image is generated for the scene (504). For example, and as described in detail herein, the image generator 402 generates the noisy image 422 at a second SPP (e.g., 1 SPP, < 10 SPP). A flash data is generated for the scene (506). For example, and as described in detail herein, the image generator 402 generates the flash data using the paths of rays used to generate the noisy image 422 and, for each path, a virtual light point (e.g., from a virtual flash), the flash data being stored in a flash buffer. A virtual flash image is generated (508). For example, and as described in detail herein, the virtual flash image generator 410 copies one or more auxiliary buffers of the noisy image 422 and combines the one or more auxiliary buffers with the frame buffer 424. In this manner, the virtual flash image is a combination of the flash buffer 422 and the one or more auxiliary buffers of the noisy image.

As also described in detail herein, the noisy image, the virtual flash image, the auxiliary buffers and the ground truth image are stored as a training pair for training a denoiser (e.g., a neural network). For example, training pairs can be provisioned for multiple scenes (e.g., tens, hundreds, thousands of scenes) and can be stored for training. A denoiser is trained (510). For example, and as described in detail herein, the training pairs are processed by the training system 412 through multiple iterations of training to train the denoiser 414 and provide the trained denoiser 414'. The denoiser is deployed (512). For example, and as described in detail herein, the denoiser 414' is deployed to the inference system 406 for denoising images, such as images that are generated in real-time using Monte Carlo rendering.

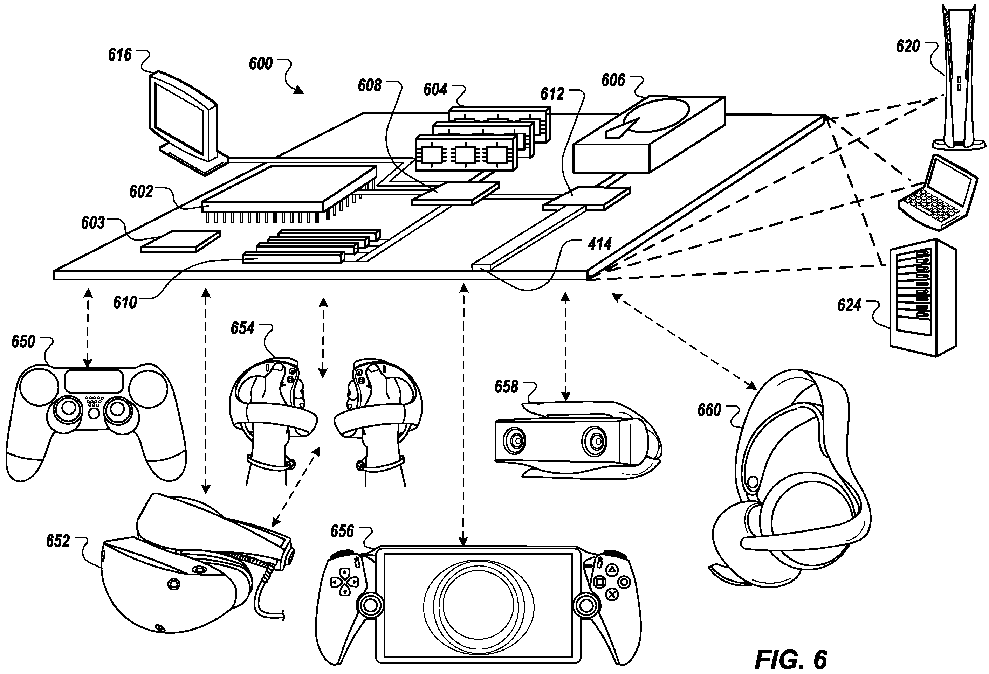

FIG. 6 shows an example of a computing device 600 and associated accessories that can be employed to execute implementations of the present disclosure. The computing device 600 is intended to represent various forms of gaming consoles such as PS5^{®}, PS4^{®}, PS3^{®}, PS2^{®} etc., desktops, workstations, personal digital assistants, servers, blade servers, mainframes, and other appropriate computers. The components shown here, their connections and relationships, and their functions, are meant to be examples only, and are not meant to be limiting. The computing device 600 can form at least a portion of a gaming system that can include one or more remote computing devices such as ones implementing a cloud-based portal or gaming platform.

In various implementations, the computing device 600 includes some combination of one or more processors or central processing units (CPUs) 602, one or more graphic processing units (GPUs) 603, memory 604, one or more storage devices 606, a high-speed interface 608, and/or a low-speed interface 612. In some implementations, the high-speed interface 608 connects to the memory 604 and multiple high-speed expansion ports 610. In some implementations, the low-speed interface 612 connects to a low-speed expansion port 614 and the storage device 604. In some implementations, the high-speed interface 608 connects to the storage device 604. Each of the processor 602, the GPU 603, the memory 604, the storage device 606, the high-speed interface 608, the high-speed expansion ports 610, and the low-speed interface 612, are interconnected using various buses, and may be mounted on a common motherboard or in other manners as appropriate. The processor 602 can process instructions for execution within the computing device 600, including instructions stored in the memory 604 and/or on the storage device 606 to display graphical information for a graphical user interface (GUI) on an external input/output device, such as a display 616 coupled to the high-speed interface 608. In other implementations, multiple processors and/or multiple buses may be used, as appropriate, along with multiple memories and types of memory. In addition, multiple computing devices may be connected, with each device providing portions of the necessary operations (e.g., as a server bank, a group of blade servers, or a multi-processor system).

The memory 604 stores information within the computing device 600. In some implementations, the memory 604 is a volatile memory unit or units. In some implementations, the memory 604 is a non-volatile memory unit or units. The memory 604 may also be another form of a computer-readable medium, such as a magnetic or optical disk. In some implementations, the memory 604 includes Graphics Double Data Rate (GDDR) memory such as GDDR6 memory configured to provide a unified memory architecture with a high bandwidth. In some implementations, the memory can include high speed memory such as GDDR2, GDDR3, GDDR4, GDDR5, GDDR5X, GDDR6X, GDDR6W or GDDR7. Such high-speed memory can facilitate rapid data access and seamless multitasking, supporting gaming and multimedia applications.

The storage device 606 is capable of providing mass storage for the computing device 600. In some implementations, the storage device 606 may be or include a computer-readable medium, such as a hard disk device, an optical disk device, a flash memory, or other similar solid-state memory device, or an array of devices, including devices in a storage area network or other configurations. In some implementations, the storage device 606 can include a high capacity solid-state drive (SSD) configured to support a high throughput (e.g., 5.5 GB/s or more). Such an SSD can facilitate fast load times, enabling near-instantaneous game booting, level transitions, and asset streaming. In some implementations, the storage device 606 can be configured to support expandable storage via compatible non-volatile memory express (NVMe) SSDs. Instructions can be stored in an information carrier, and when executed by one or more processing devices, such as processor 602, perform one or more methods, such as those described above. The instructions can also be stored by one or more storage devices, such as non-transitory computer-readable or machine-readable mediums, such as the memory 604, the storage device 606, or memory on the processor 602. The instructions can constitute software for providing interactive game play on a user interface such as a graphical user interface (GUI) presented on the display 616.

The high-speed interface 608 manages bandwidth-intensive operations for the computing device 600, while the low-speed interface 612 manages lower bandwidth-intensive operations. Such allocation of functions is an example only. In some implementations, the high-speed interface 608 is coupled to the memory 604, the display 616 (e.g., through a graphics processor or accelerator), and to the high-speed expansion ports 610, which may accept various expansion cards. In the implementation, the low-speed interface 612 is coupled to the storage device 606 and the low-speed expansion port 614. The low-speed expansion port 614, which may include various communication ports (e.g., Universal Serial Bus (USB) Type-A and Type-C ports, High-Definition Multimedia Interface (HDMI) ports, Bluetooth, Ethernet, wireless Ethernet) may be coupled to one or more input/output and/or accessory devices. Such input/output and accessory devices can include a controller 650 such as a DualSense^{®}, DualShock^{®}, or Access^{™} controllers for PlayStation^{®} devices, a virtual reality (VR) or augmented reality (AR) headset 652 such as the PS VR2 headset, accessory controllers 654 such as PS VR2 Sense^{™}, a handheld gaming device 656 such as PlayStation Portal^{®}, a camera 658, and/or an earphone/headphone set 660 such as the PULSE Elite^{™} headset or the Pulse Explore^{™} earbuds. In some implementations, the computing device 600 includes one or more acoustic transducers, and/or is connected to one or more external acoustic transducers such as one or more speakers associated with the display 616.

The computing device 600 may be implemented in a number of different forms, as shown in the FIG. 6. For example, the computing device 600 may be implemented as a gaming console 620, or as one or more servers 624 or as a rack within a server. In some implementations, the computing device 600 may be implemented as a personal computer such as a laptop computer 622. In some implementations, the computing device 600 can be implemented as a mobile device such as the connected handheld gaming device 656. In some implementations, a computing device can include one or more of the computing device 600, and an entire system may be made up of multiple computing devices communicating with each other. For example, a gaming system can include one or more of a gaming console 620, one or more accessories, and a remote platform such as a cloud-based platform implemented on one or more servers 624.

The processor 602 can be implemented as a chipset of chips that include separate and multiple analog and digital processors. For example, the processor 602 can be a multi-core processor that supports high-speed processing and enables complex computational tasks, real-time physics simulations, and advanced artificial intelligence (AI) capabilities. In one example, the processor 602 includes at least 8 cores, at least 16 threads, and operates at variable frequencies around 3.5 GHz or more. In some implementations, the processor 602 may be a Complex Instruction Set Computers (CISC) processor, a Reduced Instruction Set Computer (RISC) processor, or a Minimal Instruction Set Computer (MISC) processor.

In some implementations, the GPU 603 includes a custom GPU that supports an advanced architecture such as the RDNA 2 architecture developed by AMD. In one example, the GPU 603 includes at least 36 compute units running at speeds of 2 GHz or more, and delivers performance of at least 10 teraflops. The GPU 603 can be configured to support high quality graphics rendering. For example, the GPU 603 can be configured to support hardware-accelerated ray tracing for enhanced realism in lighting and reflections, thereby providing a highly immersive gaming experience.

The computing device can be configured to interact with one or more connected input/output or accessory device in providing the gaming experience. In some implementations, the computing device communicates with a handheld controller 650-e.g., a DualSense^{™}, DualShock^{®}, or Access^{™} controller for PlayStation^{®} devices-to provide the gaming experience. In some implementations, the controller 650 features a high-fidelity haptic feedback system with one or more actuators that simulate a wide range of tactile sensations. In some implementations the controller 650 includes one or more adaptive triggers that adjust resistance based on in-game actions to provide for a realistic feel. The ergonomic design of the controller 650 can be configured to allow for comfortable use even in long gaming sessions. For example, the controller 650 can include textured grips and an optimized button layout. In some implementations, the controller 650 includes one or more of: integrated motion sensors, a high-resolution touchpad, and a built-in microphone array. The controller 650 includes an array of buttons, joysticks, and other controls that allow a user to interact with the computing device 600 to participate in interactive gameplay presented, for example, on a display device such as the display 616. The controller 650 can be powered by one or more regular or rechargeable batteries and supports both wireless and wired connectivity with the computing device 600, for example, via Bluetooth, WiFi, USB-C etc., or via a proprietary connection such as PlayStation Link^{™}. In some implementations, the controller 650 includes a light bar and player indicators for visual feedback and customization.

In some implementations, the input/output or accessory device includes a VR/AR headset 652. One example of such a headset is the PlayStation VR2 (PS VR2) headset that is configured to provide an immersive and interactive gaming experience. In some implementations, the headset 652 features dual organic light emitting device (OLED) displays with a combined resolution of 4000 x 2080 pixels-thus providing sharp visuals and a wide field of view. In some implementations, the VR/AR headset 652 includes advanced eye-tracking technology that enables foveated rendering, optimizing performance by focusing on where the user is looking. In some implementations, the headset 652 includes integrated cameras that facilitate tracking head movements without external sensors. In some implementations, the headset includes haptic feedback for tactile sensations and/or one or more acoustic transducers configured to provide a spatial sound effect the user. The headset 652 can include an adjustable headband and cushioned padding, and can be configured to connect to the computing device 600 either over a wireless network (e.g., over a WiFi^{®} or Bluetooth^{®} connection, or a proprietary connection such as PlayStation Link^{™}) or over a wire such as a USB-C cable.

In some implementations, the headset 652 can be configured to work in conjunction with one or more accessory controllers 654 such as the PlayStation VR2 Sense^{™} controllers. The accessory controllers 654 can be configured to enhance the immersive gaming experience through various features such as advanced haptic feedback for detailed in-game sensations, adaptive triggers with dynamic resistance to simulate real-world actions, and finger touch detection for natural interactions. The ergonomics of the accessory controllers 654 can be configured to provide a comfortable experience even during extended gameplay. In some implementations, the accessory controllers include one or more integrated sensors (accelerometer, gyroscope, etc.) and cameras to provide motion tracking. The accessory controllers 654 can be configured to connect to the computing device 600 and/or the headset 652 over a wireless connection such as WiFi^{®} or Bluetooth^{®}.

In some implementations, the computing device 600 can be connected to a handheld gaming device 656 such as the PlayStation Portal^{®}. The handheld gaming device 656 can be configured to stream games and media from the computing device 600 via a wireless connection such as WiFi^{®} or Bluetooth^{®}. The handheld gaming device 656 includes a high-resolution screen that allows users to play games and/or stream media remotely without using the display 616 connected to the computing device 600. This allows the display to be used for other purposes while the computing device 600 facilitates gameplay on the handheld gaming device 656. In some implementations, the handheld gaming device 656 is configured to act as a streaming receiver without running games natively on the device 656 itself. This makes the handheld gaming device 656 a convenient option for playing games run on the computing device 600, while leaving a TV connected to the computing device 600 free to be used for viewing other media. The handheld gaming device 656 can includes buttons and features similar to (or even same as) the controller 650, thus providing for a similar gaming experience as that with the controller 650.

In some implementations, the input/output or accessory devices can include a camera 658 and/or an earphone/headphone set 660 such as the PULSE Elite^{™} headset or the Pulse Explore^{™} earbuds. The camera 658 can be used to track user-movements, which in turn can be used as an input to an interactive game being executed on the computing device 600. The earphone/headphone set 660 can be used to provide audio feedback/output to a user from the computing device 600. In some implementations, the earphone/headphone set 660 can include a microphone configured to receive spoken inputs/instructions that in turn can be used to control an interactive game being executed on the computing device 600.

While this specification contains many specific implementation details, these should not be construed as limitations on the scope of what is being claimed, which is defined by the claims themselves, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially be claimed as such, one or more features from a claimed combination can in some cases be excised from the combination, and the claim may be directed to a sub-combination or variation of a sub-combination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

Particular implementations of the subject matter have been described. Other implementations are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method for provisioning denoisers for denoising images, the method being executable by one or more processors and comprising:
generating a ground truth image at a first samples per pixel (SPP) and a noisy image at a second SPP, each of the ground truth image and the noisy image depicting a scene of a plurality of scenes represented within a three-dimensional (3D) model;
generating flash data using paths of rays used to generate the noisy image, the flash data being generated by casting a virtual light point along at least a portion of each path and being stored in a flash buffer;
generating a virtual flash image by combining the flash buffer with one or more auxiliary buffers of the noisy image;
storing the ground truth image and the virtual flash image as a training pair in a set of training pairs, each training pair in the set of training pairs being generated for a respective scene of the plurality of scenes;
training a denoiser to denoise images using the set of training pairs; and
after training, deploying the denoiser for inference to denoise images.

2. The method of claim 1, wherein the training pair further includes the noisy image and one or more buffers.

3. The method of claim 2, wherein the one or more buffers comprises one or more of auxiliary buffers of the noisy image and the flash buffer.

4. The method of claim 1, wherein the flash data represents an effect that the virtual light point has in determining illumination for a respective pixel.

5. The method of claim 1, wherein the flash data is generated by applying a virtual flash to the scene from a point-of-view (POV) of a camera.

6. The method of claim 1, wherein at least a portion of each path comprises a portion to a last hit point of a respective ray within the scene.

7. The method of claim 1, wherein the virtual light point provides direct illumination of a hit point within the scene.

8. The method of claim 1, wherein the denoiser comprises a neural network.

9. The method of claim 1, wherein each of the ground truth image and the noisy image is generated using Monte Carlo rendering.

10. A non-transitory computer-readable storage medium coupled to one or more processors and having instructions stored thereon which, when executed by the one or more processors, cause the one or more processors to perform operations for provisioning denoisers for denoising images, the operations comprising:
generating a ground truth image at a first samples per pixel (SPP) and a noisy image at a second SPP, each of the ground truth image and the noisy image depicting a scene of a plurality of scenes represented within a three-dimensional (3D) model;
generating flash data using paths of rays used to generate the noisy image, the flash data being generated by casting a virtual light point along at least a portion of each path and being stored in a flash buffer;
generating a virtual flash image by combining the flash buffer with one or more auxiliary buffers of the noisy image;
storing the ground truth image and the virtual flash image as a training pair in a set of training pairs, each training pair in the set of training pairs being generated for a respective scene of the plurality of scenes;
training a denoiser to denoise images using the set of training pairs; and
after training, deploying the denoiser for inference to denoise images.

11. The non-transitory computer-readable storage medium of claim 10, wherein the training pair further includes the noisy image and one or more buffers.

12. The non-transitory computer-readable storage medium of claim 11, wherein the one or more buffers comprises one or more of auxiliary buffers of the noisy image and the flash buffer.

13. The non-transitory computer-readable storage medium of claim 10, wherein the flash data represents an effect that the virtual light point has in determining illumination for a respective pixel.

14. The non-transitory computer-readable storage medium of claim 10, wherein the flash data is generated by applying a virtual flash to the scene from a point-of-view (POV) of a camera.

15. The non-transitory computer-readable storage medium of claim 10, wherein at least a portion of each path comprises a portion to a last hit point of a respective ray within the scene.

16. A system, comprising:
a computing device; and
a computer-readable storage device coupled to the computing device and having instructions stored thereon which, when executed by the computing device, cause the computing device to perform operations for provisioning denoisers for denoising images, the operations comprising:
generating a ground truth image at a first samples per pixel (SPP) and a noisy image at a second SPP, each of the ground truth image and the noisy image depicting a scene of a plurality of scenes represented within a three-dimensional (3D) model;
generating flash data using paths of rays used to generate the noisy image, the flash data being generated by casting a virtual light point along at least a portion of each path and being stored in a flash buffer;
generating a virtual flash image by combining the flash buffer with one or more auxiliary buffers of the noisy image;
storing the ground truth image and the virtual flash image as a training pair in a set of training pairs, each training pair in the set of training pairs being generated for a respective scene of the plurality of scenes;
training a denoiser to denoise images using the set of training pairs; and
after training, deploying the denoiser for inference to denoise images.

17. The system of claim 16, wherein the training pair further includes the noisy image and one or more buffers.

18. The system of claim 17, wherein the one or more buffers comprises one or more of auxiliary buffers of the noisy image and the flash buffer.

19. The system of claim 16, wherein the flash data represents an effect that the virtual light point has in determining illumination for a respective pixel.

20. The system of claim 16, wherein the flash data is generated by applying a virtual flash to the scene from a point-of-view (POV) of a camera.
